# EUROPEAN PATENT SPECIFICATION

(11) **EP 1 486 373 B1**
(45) Date of publication and mention of the grant of the patent: **25.10.2006**
(21) Application number: 04013020.5
(22) Date of filing: 02.06.2004
(51) Int. Cl.: B60N 3/02, F16B 7/06

(54) **Fastening device for fastening a piece of equipment to a vehicle superstructure and vehicle provided with such fastening device**
Befestigungsvorrichtung zum Befestigen eines Aurüstungsteils am Oberbau eines Fahrzeuges und damit ausgestattetes Fahrzeug
Dispositif de fixation pour fixer une pièce d'équipement à la superstructure d'un véhicule et véhicule équipé d'un tel dispositif de fixation

(30) Priority: 10.06.2003 GB 0313343
(43) Date of publication of application: 15.12.2004
(73) Proprietor: Bombardier Transportation GmbH, 13627 Berlin (DE)
(72) Inventor: Welz, Alfons, 13591 Berlin (DE); Martens, Holger, 16540 Hohen Neuendorf (DE); Bombryck, Volker, 16767 Leegebruch (DE); Lauszat, Christian, 16761 Hennigsdorf (DE); Bohrer, Hans-Rudolf, 1404 Oberwil (CH)
(74) Representative: Broydé, Marc

(56) References cited:
- EP-A- 1 201 494
- AT-B- 322 916
- DE-C- 4 422 211
- DE-U- 20 200 380
- DE-U- 29 518 343
- GB-A- 731 796

## Description

The invention relates to the attachment of pieces of equipment, in particular interior equipment and fittings, to a vehicle superstructure such as a basic framework or a panel structure of a car body. It relates in particular, but not exclusively, to the fastening of tubular elements such as handrails, handholds, grab bars, grab handles or luggage racks, in particular in public transportation vehicles such as railway vehicles, trams, trolley cars or buses.

Handrails and handholds are usually provided in access areas and along the side walls of public transportation vehicles. They are either already present as structural components of wall panelling or are mounted subsequently using cantilever-type fasteners. Superstructure shells for vehicles such as track-bound vehicles have shape and positional tolerances, which are predetermined by the way they are manufactured and to which all inner equipment must adapt. Conventional methods of mounting handrails offer insufficient possibilities for handrail components to compensate for differences in shape and position between panelling and shell and frequently prevent stress-free mounting of handrail components. In the case of inner panelling made of plastic, such mounting stress often leads to damage in the long term, necessitating costly repair measures. Where handrail components have been customized to fit a particular mounting situation in order to limit mounting stress, replacement components have to be adapted at considerable effort and expense whenever a defect handrail component is to be replaced. Conventional screwed cantilever connections on the other hand are expensive and visible covers over bore holes on vertical and horizontal handrails are not to the customers' taste from a design point of view, and therefore undesirable.

A fastening means for fastening a tubular handrail to a holding bar is described in document DE 44 22 211 C1. A first adapter is fixed to the holding bar by means of a first screw and nut connection, which extends radially in relation to the holding bar. A second adapter is fixed to the end of the handrail by means of a second axial screw and nut connection. The first and second adapters are then fixed to one another by means of a cross bolt. The assembly of the handrail is therefore cumbersome. Moreover, the two adapters are complex and expensive parts.

The foregoing shortcomings of the prior art are addressed by the present invention. More specifically, the invention aims at providing a fastening device for fastening a piece of equipment to a superstructure of a vehicle, which is easy to mount and take apart and which can advantageously compensate for misalignment or tolerances as well as being free of visible openings.

According to a first aspect of the invention, there is provided a fastening device for fastening a piece of equipment to a vehicle superstructure, comprising:
- a tightening means defining a geometrical axis of rotation, the tightening means having a first thread, a second thread and a mechanical interface for cooperating with a mounting tool for rotating the tightening means about the geometrical axis, the first and second threads having opposed hands of thread;
- a first securing means comprising a first complementary thread engaged with the first thread, the first securing means being adapted for cooperating with the piece of equipment in such a way that the first complementary thread is rotationally fixed in relation to the piece of equipment and cannot axially move in relation to the piece of equipment towards the second end of the tightening means ;
- a second securing means comprising a second complementary thread engaged with the second thread, the second securing means being adapted for cooperating with the superstructure in such a way that the second complementary thread is rotationally fixed with respect to the superstructure and cannot axially move in relation to the superstructure towards the first end of the tightening means; and
- a spacer sleeve comprising a first longitudinal end for axially cooperating with the piece of equipment and a second longitudinal end for axially cooperating with the superstructure.

When the tightening means is progressively screwed, becoming disposed to move the first and second securing means towards one another, the spacer sleeve prevents movement of the piece of equipment towards the superstructure. Due to the two opposed hands of thread, no translation of the tightening means occurs when it is engaged with the first and second securing means, thus facilitating assembly of the fastening device. At each fastening point, only short mounting times are required since there is only one tightening means to be bolted. During assembly, axial tension stress is applied to the tightening means, while compressive stress is applied to the spacer sleeve. Once mounted, the device tolerates high levels of stress and allows compensating for considerable variations of position in order to guarantee stress-free mounting.

The first securing means can be integrally formed with the piece of equipment and, similarly, the second securing means can be integrally formed with the superstructure. However, the securing means are preferably mounted to the corresponding part so as to allow at least some radial movement in relation to the superstructure and/or to the piece of furniture before tightening. Advantageously, the first securing means is adapted to be movable in relation to the piece of equipment in a direction perpendicular to the geometrical axis. Since the securing means is not integrally formed with the corresponding part to which it is connected, it allows better positioning of the fastening device and any positional tolerances can be compensated. Similarly, the second securing means is adapted to be movable in relation to the superstructure in a direction perpendicular to the geometrical axis.

Advantageously, the first thread is a first external thread axially protruding from the first end of the spacer sleeve and engaged with the first complementary thread. Similarly, the second thread is a second external thread axially protruding from the second end of the spacer sleeve and engaged with the second complementary thread. The protruding external threads are easy to engage the complementary internal threads.

Advantageously, the tightening means comprises a double-ended rod having a first end on which the first external thread is formed and a second end on which the second external thread is formed, at least an intermediate portion of the rod being received inside the spacer sleeve. The double-ended rod is well adapted to withstand tension stress, while the spacer sleeve is well adapted to withstand compression stress. The coaxial, or nearly coaxial, arrangement is particularly compact and aesthetically pleasing since the rod is hidden.

Advantageously, the mechanical interface of the tightening means is inside the spacer sleeve and the spacer sleeve has a lateral aperture for accessing the interface with a mounting tool. This lateral aperture is easy to hide since its axis is parallel to the wall of the superstructure and to the main surfaces of the piece of equipment. A cap can close the aperture to prevent unauthorised access to the tightening means.

Advantageously, a secondary spacer is located between the second end of the spacer sleeve and the second securing means. The secondary spacer is adapted to transfer to the second securing means part of the axial thrust forces applied by the second end of the spacer sleeve to the front wall of the superstructure so as to avoid damages to this wall.

According to another aspect of the invention, there is provided a vehicle with a vehicle superstructure, a piece of equipment and the fastening device as described above for fastening the piece of equipment to the vehicle superstructure.

Advantageously, at least one of the piece of equipment and of the superstructure comprises a front facing the tightening means, a back facing away from the tightening means and a through hole allowing passage between the front and the back, either the first or the second longitudinal ends of the space sleeve abutting on the front and surrounding the through hole. At least one of the first securing means and second securing means comprises an abutment cooperating with the back. The tightening means may comprise a rod that extends through the through hole, one of the first and second threads being an external thread at one end of the rod. At least one of the first and of the second securing means may comprise a nut that is located in the back and engages with the external thread. Preferably, the rod has a section that is smaller than a section of the through hole so that the rod is radially movable with respect to the through hole. These features allow lateral movement of the fastening device parallel to the back during assembly, to adapt to positional tolerances of the superstructure. The term "nut" should be construed as including any type of component that is not integrally formed with the corresponding part, be it a piece of equipment or superstructure, to which it is connected and which is provided with an internal thread and an abutment face bearing against a wall surface of the corresponding part to limit axial movement of the nut towards the spacer sleeve.

The fastening device is particularly well adapted to pieces of equipment that comprise a tubular member having a geometrical axis perpendicular to the axis of the fastening device, the nut being inside said tubular member.

Mounting the handrail or other piece of equipment in accordance with the invention guarantees that differences in shape and position between the vehicle superstructure, e.g. panelling and/or a vehicle shell on the one hand, and the equipment components on the other hand are easily compensated and the handrail can be fastened without stress so that no panelling parts are damaged. The forces exerted on components during assembly are reduced, if not completely eliminated. The fastening point is provided in an area that has neither an unfavourable effect on overall design nor is easily accessible to the passenger. Should it become necessary to take the unit apart, the fastening can be simply and quickly released. Adding replacement components is just as simple and can be carried out without further adjustment work. Due to the weld-free design of the handrail components, much simpler and cheaper surface treatment (such as galvanising, plastic powder coating) can be applied with a lower risk to quality.

Other advantages and features of the invention will become more clearly apparent from the following description of specific embodiments of the invention given as non-restrictive examples only and represented in the accompanying drawings in which:
- figure 1 is a cross-section of a handrail fastened by means of a fastening device of the invention on a curved panel wall;
- figure 2 is a planar view, partially in cross-section, of a handrail fastened to a straight panel wall;
- figure 3 is planar view, partially in cross-section, of a handrail fastened to a C-shaped rail of a vehicle superstructure;
- figure 4 is a cross-sectional view of a handrail mounting for an angled support tube.

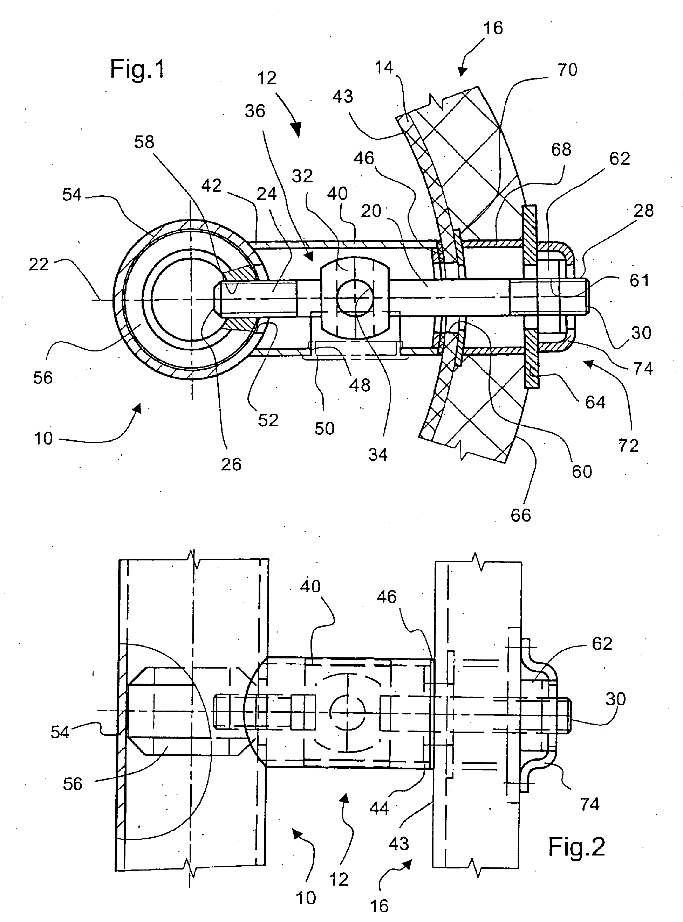

With reference to figure 1, a piece of equipment 10, in the present case a tubular handrail, is mounted via a fastening device 12 to a curved panel wall 14 of the superstructure 16 of a transportation vehicle.

The fastening device 12 comprises a longitudinal tension rod 20, which defines a geometrical axis 22. A first thread 24 is formed at a first end 26 of the rod 20 and a second thread 28 is formed at a second end 30 of the rod 20. One of the threads 24, 28 is a right-handed thread, whereas the other thread is a left-handed thread. A coupling ring 32 with at least one radial hole 34, and preferably a second radial hole (not shown) perpendicular to the radial hole 34, is keyed or otherwise rigidly attached to the rod 20 to form with the rod an integral tightening means 36. The central part of the tension rod 20 is received in a spacer sleeve 40, which axially abuts on the handrail 10 at a first end 42 and on a front side 43 of the panel wall 14 at the other end 44. The sleeve 40 can be provided with washers 46 that bear against the wall and/or the piece of equipment. The sleeve has a radial aperture 48 giving access to the coupling ring 32, so that a hand tool can be engaged through the radial aperture 48 into the hole 34 to turn the rod 20 about its axis 22. The aperture 48 is preferably closed with a cap 50. The first end 42 of the sleeve surrounds a through hole 52 in the tubular wall 54 of the handrail 10. A ring-shaped nut 56 is received inside the tubular handrail 10 and constitutes a first securing means for the fastening device 12. This ring 56 has a radial threaded hole 58. The first end 26 of the rod extends through the hole 52 and is screwed into the radial threaded hole 58 of the ring 56. The second end 44 of the spacer sleeve surrounds a through hole 60 in the curved panel wall 14 of the vehicle superstructure. The second free end 30 of the rod extends through the through hole 60 and is engaged with an internal thread 61 of a second nut 62 at the back of the panel 14. The nut 62 bears against a washer 64 that transmits the thrust force to the back 66 of the panel wall 14. A spacer 68 with an end abutment 70 is inserted between the panel wall 14 and the washer 64, so as to constitute, with the washer 64 and the nut 62, a second securing means 72 for the fastening device 12.

A cover 74 fixed to the back 66 of the panel wall 14 or directly to the washer 64 may be used to hold the nut 62 before assembly if the back 66 of the panel wall is not accessible when assembling the handrail 10. During assembly, the ring-shaped nut 56 can slide inside the tubular wall 54 of the handrail 10. Similarly, the nut 56 can move tangentially in relation to the superstructure 16. Moreover, the section of the rod 20 is substantially smaller than the sections of the through holes 52 and 60, whereby the position of the rod 20 can be adjusted to compensate for misalignments or tolerances, independently from the position of the spacer sleeve 40. The section of the spacer sleeve 40 is substantially larger than the section of the through holes 52 and 60, so that the position of the spacer sleeve 40 can also be adjusted, while keeping the through holes 52 and 60 hidden. Once the components have been moved into position, the tension rod 20 is turned about its axis 22 by means of a mounting tool inserted into the radial hole 34 through the aperture 48. The external threads 24 and 28 are simultaneously screwed into the two nuts 56 and 62. Tension stress is progressively applied to the rod 20, while the spacer sleeve 40 is compressed between the panel wall 14 of the superstructure and the wall 54 of the piece of equipment 10. The spacer 68 is used to transmit to the washer 64 at least part of the forces applied by the spacer sleeve 40 to the panel wall 14, to avoid damage of the panel wall 14, which can be made of plastic.

Further embodiments of the invention are shown in figures 2 to 4. The fastening device according to these further embodiments of the invention are of similar structure to that of the first embodiment, so that the same reference signs have been taken to designate identical or similar elements.

The fastening device according to the second embodiment shown in figure 2 differs from the first one merely in that the panel wall 14 of the superstructure is planar, so that the second end 44 of the sleeve has a planar circular edge. The comparison between both embodiments illustrates the fact that the fastening device is versatile and can easily be adapted to various situations while keeping many common parts.

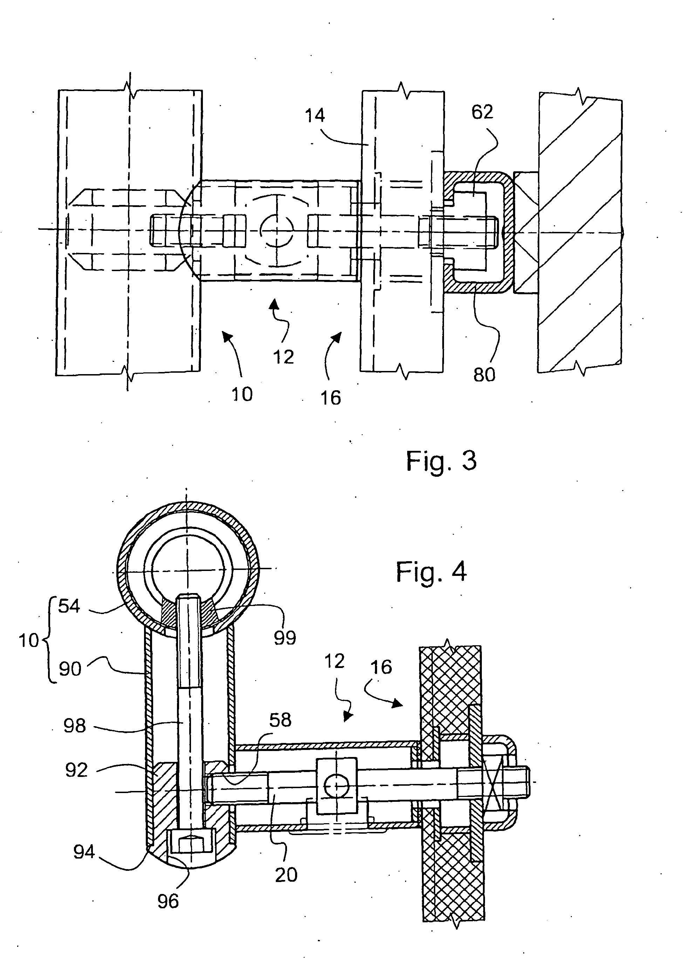

The fastening device according to a third embodiment shown in figure 3 differs from the previous ones merely in that the nut 62 is inserted into a C-shaped rail 80 of the superstructure frame of the vehicle, which is also used for fastening the panel.

The fastening device according to the fourth embodiment shown in figure 4 differs from the previous ones merely in that the handrail 54 is connected to the fastening means 12 via a tubular connector 90, forming a L-shaped connection to the wall. The rod 20 is screwed into a radial threaded hole 58 of a socket 92. The socket 92 is provided with a shoulder 94 in contact with the edge of the tubular connector 90 and a longitudinal through hole 96 for receiving a bolt 99 that is screwed into a nut 99 received in the tubular handrail 54.

While preferred embodiments of the invention have been described, it is to be understood by those skilled in the art that the invention is naturally not limited to these embodiments. Many variations are possible:
The fastening device of the invention can be used to fasten any kind of equipment component, in particular but not exclusively tubular elements such as handrails, handholds, grab bars or grab handles, or luggage racks.
The spacer sleeve can be in one or in several parts, provided it has sufficient axial rigidity and can withstand compression stress. In this respect, the washer 46 can be considered as part of the spacer sleeve. The shape of the cross-section of the spacer sleeve can be chosen according to specific needs.
The coupling ring 32 of the rod can be replaced by any other suitable interface, e.g. by an interface having an hexagonal cross-section, a drive pinion or a splined, grooved or ribbed surface that provides a good grip for an appropriate tool. Preferably, a torque-controlled tool is used to carry out final mounting of the tension rod. The interface can be formed together with rod 20 out of one piece of material.
The tightening means is not necessarily a double-ended stud or rod. Instead, a double coupling with two threaded holes can be used, provided one of the threads is right-handed and the other one is left-handed. Alternatively, a coupling with one external thread and one internal thread can be used.
The securing means can have one or more components, as illustrated by the described embodiments. In particular, several parts may be required for securing the tension rod on to a particular piece of equipment. The spacer 68 and the washer 64 can be eliminated if the wall 14 of the superstructure is rigid enough. The cover 74 can be screwed or welded to the washer. The washer 62, spacer 68 and washer 70 can also be rigidly connected (e.g. welded) to each other and/or rigidly connected to the superstructure.
The nut 62 may have the shape of a spherical calotte facing the hole of the washer 64, thus allowing further compensation of misalignment.
The ring 56 may have at least one chamfer to facilitate its insertion into the tubular piece of equipment 10. The nut 56 can be shaped as a sector of a ring or of a cylinder.

## Claims

1. A fastening device (12) for fastening a piece of equipment (10) to a vehicle superstructure (16), comprising:
- a tightening means (36) defining a geometrical axis (22) of rotation, the tightening means (36) having a first thread (24), a second thread (28) and a mechanical interface (32) for cooperating with a mounting tool for rotating the tightening means (36) about the geometrical axis (22), the first and second threads having opposed hands of thread;
- a first securing means (56) comprising a first complementary thread (58) engaged with the first thread (24), the first securing means being adapted for cooperating with the piece of equipment (10) in such a way that the first complementary thread (58) is rotationally fixed in relation to the piece of equipment (10) and is prevented from axially moving in relation to the piece of equipment towards the second end (30) of the tightening means (36);
- a second securing means (72) comprising a second complementary thread (61) engaged with the second thread (28), the second securing means being adapted for cooperating with the superstructure (16) in such a way that the second complementary thread (61) is rotationally fixed in relation to the superstructure and cannot axially move in relation to the superstructure towards the first end (26) of the tightening means (36); and
- a spacer sleeve (40) having a first longitudinal end (42) for axially cooperating with the piece of equipment (10) and a second longitudinal end (44) for axially cooperating with the superstructure (16).

2. The fastening device of claim 1, wherein the first securing means (56) is adapted to be movable in relation to the piece of equipment (10) in a direction perpendicular to the geometrical axis (22).

3. The fastening device of claim 1 or claim 2, wherein the second securing means is adapted to be movable in relation to the superstructure in a direction perpendicular to the geometrical axis.

4. The fastening device of any one of the preceding claims, wherein
- the first thread is a first external thread (24) axially protruding from the first end (42) of the spacer sleeve and engaged with the first complementary thread (58);
- the second thread is a second external thread (28) axially protruding from the second end (44) of the spacer sleeve and engaged with the second complementary thread (61).

5. The fastening device of claim 4, wherein the tightening means comprises a double-ended rod (36) having a first end (26) on which the first external thread (24) is formed and a second end (30) on which the second external thread (28) is formed, an intermediate portion of the rod (36) being received inside the spacer sleeve (40).

6. The fastening device of any one of the preceding claims, wherein the mechanical interface (32) of the tightening means is positioned inside the spacer sleeve (40) and the spacer sleeve has a lateral aperture (48) for accessing the interface with the mounting tool.

7. The fastening device of any one of the preceding claims, further comprising a secondary spacer (68) located between the second end (46) of the spacer sleeve and the second securing means (72).

8. A vehicle provided with a vehicle superstructure (16), a piece of equipment (10) and the fastening device (12) of any one of the preceding claims for fastening the piece of equipment (10) to the vehicle superstructure (16).

9. The vehicle of claim 8, further comprising a holding means (74) to hold the second securing means (72) in relation to the superstructure (16).
- at least one of the piece of equipment (10) and of the superstructure (16) comprises a front facing the tightening means (36), a back facing away from the tightening means (36) and a through hole (52, 60) allowing passage between the front and the back, one of the first and second longitudinal ends (42, 44) of the spacer sleeve (40) abutting on the front and surrounding the through hole (52, 60); and
- at least one of the first securing means (56) and second securing means (72) comprises an abutment cooperating with the back.

10. The vehicle of claim 9, wherein
- the tightening means comprises a rod (20) that extends through the through hole (52, 60), one of the first and second thread being an external thread (24, 28) at one end of the rod; and
- at least one of the first and second securing means (56, 62) comprises a nut (56, 62) that is located at the back and engages with the external thread (24, 28).

11. The vehicle of claim 10, wherein the rod (20) has a section that is smaller than a section of the through hole (52, 60) so that the rod is radially movable in relation to the through hole.

12. The vehicle of claims 10 or 11, wherein the piece of equipment comprises a tubular member (54) having a geometrical axis perpendicular to the axis of the fastening device, the nut (56) being inside said tubular member.

13. The vehicle of any one of claims 9 to 12, further comprising holding means (74) for holding the second securing means in relation to the vehicle superstructure.

## Patentansprüche

1. Eine Befestigungsvorrichtung (12) zum Befestigen eines Ausrüstungsteils (10) am Oberbau (16) eines Fahrzeuges mit:
- ein Spannmittel (36), das eine geometrische Drehachse (22) beschreibt, wobei das Spannmittel (36) ein erstes Gewinde (24) hat, ein zweites Gewinde (28) und eine mechanische Schnittstelle (32) für das Zusammenwirken mit einem Montagewerkzeug zum Drehen des Spannmittels(36) um die geometrische Achse (22), wobei das erste und das zweite Gewinde entgegengesetzte Gewindeeingänge haben;
- ein erstes Sicherungsmittel (56), das ein erstes ergänzendes Gewinde (58) hat, das in das erste Gewinde (24) eingreift, wobei das erste Sicherungsmittel für das Zusammenwirken mit dem Ausrüstungsteil (10) so angepaßt ist, daß das erste ergänzende Gewinde (58) in Drehung in Bezug zum Ausrüstungsteil (10) befestigt ist und daran gehindert wird, sich axial zu bewegen in Bezug zum Ausrüstungsteil zum zweiten Ende (30) der Befestigungsvorrichtung (36);
- ein zweites Sicherungsmittel (72), das ein zweites ergänzendes Gewinde (61) umfaßt, das in das zweite Gewinde (28) eingreift, wobei das zweite Sicherungsmittel für das Zusammenwirken mit dem Oberbau (16) so angepaßt ist, daß das zweite ergänzende Gewinde (61) in Drehung in Bezug zum Oberbau befestigt ist und sich nicht axial in Bezug zum Oberbau zum ersten Ende (26) des Spannmittels (36) bewegen kann, und
- ein Abstandsrohr (40) mit einem ersten länglichen Ende (42) für das axiale Zusammenwirken mit dem Ausrüstungsteil (10) und einem zweiten länglichen Ende (44) für das axiale Zusammenwirken mit dem Oberbau (16).

2. Die Befestigungsvorrichtung (12) nach Anspruch 1, bei der das erste Sicherungsmittel (56) so angebracht ist, daß es in Bezug zum Ausrüstungsteil (10) in einer senkrecht zur geometrischen Achse (22) verlaufenden Richtung beweglich ist.

3. Die Befestigungsvorrichtung nach Anspruch 1 oder Anspruch 2, bei der das zweite Sicherungsmittel so angebracht ist, daß es in Bezug zum Aufbau in einer senkrecht zur geometrischen Achse (22) verlaufenden Richtung beweglich ist.

4. Die Befestigungsvorrichtung nach einem beliebigen der vorstehenden Ansprüche, bei der
- das erste Gewinde ein erstes Außengewinde (24) ist, das axial ab dem ersten Ende (42) des Abstandsrohres hervorsteht und in das erste ergänzende Gewinde (58) eingreift;
- das zweite Gewinde ein Außengewinde (25) ist, das axial ab dem zweiten Ende (44) des Abstandsrohres hervorsteht und in das zweite ergänzende Gewinde (61) eingreift.

5. Die Befestigungsvorrichtung nach Anspruch 4, bei der das Spannmittel eine doppelendige Stange (36) umfaßt, die ein erstes Ende (26) hat, auf dem das erste Außengewinde (24) geformt ist, und ein zweites Ende (30), auf dem das zweite Außengewinde (28) geformt ist, wobei ein Mittelabschnitt der Stange (36) im Abstandsrohr (40) aufgenommen wird.

6. Die Befestigungsvorrichtung nach einem beliebigen der vorstehenden Ansprüche, bei der die mechanische Schnittstelle (32) der Befestigungsvorrichtung im Abstandsrohr (40) positioniert ist und das Abstandsrohr eine seitliche Öffnung (48) für den Zugriff mit dem Montagewerkzeug auf die Schnittstelle hat.

7. Die Befestigungsvorrichtung nach einem beliebigen der vorstehenden Ansprüche, die ferner ein zweites Abstandsrohr (68) umfaßt, die sich zwischen dem zweiten Ende (46) des Abstandsrohres und dem zweiten Sicherungsmittel (72) befindet.

8. Ein Fahrzeug versehen mit einem Fahrzeugoberbau (16), einem Ausrüstungsteil (10) und der Befestigungsvorrichtung (12) nach einem beliebigen der vorstehenden Ansprüche zum Befestigen des Ausrüstungsteils (10) am Fahrzeugoberbau (16).

9. Das Fahrzeug nach Anspruch 8, das ferner ein Haltemittel (74) zum Halten des zweiten Sicherungsmittels (72) in Bezug zum Oberbau (16) umfaßt,
- mindestens eines der Ausrüstungsteile (10) und des Oberbaus (16) umfaßt eine Vorderseite gegenüber dem Befestigungsmittel (36), eine Rückseite, die vom Befestigungsmittel (36) weg weist und ein Durchgangsloch (52, 60) für den Durchgang zwischen vorne und hinten, wobei eines des ersten und zweiten Längsendes (42, 44) des Abstandsrohres (40) auf die Vorderseite stößt und das Durchgangsloch (52, 60) umgibt, und
- mindestens eines des ersten Sicherungsmittels (56) und des zweiten Sicherungsmittels (72) umfaßt ein mit der Rückseite zusammenwirkendes Widerlager.

10. Das Fahrzeug nach Anspruch 9, bei dem
- das Spannmittel eine Stange (20) umfaßt, die sich durch das Durchgangsloch (52, 60) erstreckt, wobei eines des ersten und des zweiten Gewindes ein Außengewinde (24, 28) an einem Ende der Stange ist, und
- mindestens eines des ersten und des zweiten Sicherungsmittels (56, 62) eine Schraubenmutter (56, 62) umfaßt, die sich an der Rückseite befindet und in das Außengewinde (24, 28) eingreift.

11. Das Fahrzeug nach Anspruch 10, bei dem die Stange (20) einen Querschnitt hat, der kleiner als der Querschnitt des Durchgangsloches (52, 60) ist, so daß die Stange in Bezug zum Durchgangsloch radial beweglich ist.

12. Das Fahrzeug nach den Ansprüchen 10 oder 11, bei dem das Ausrüstungsteil ein rohrförmiges Glied (54) umfaßt, das eine geometrische Achse senkrecht zur Achse der Befestigungsvorrichtung hat, wobei sich die Schraubenmutter (56) im Innern des besagten rohrförmigen Glieds befindet.

13. Das Fahrzeug nach den Ansprüchen 9 bis 12, das ferner Haltemittel (74) zum Halten des zweiten Sicherungsmittels in Bezug zum Fahrzeugoberbau umfaßt.

## Revendications

1. Dispositif de blocage (12) permettant de bloquer un équipement (10) sur une superstructure de véhicule (16), comprenant :
- un moyen de serrage (36) définissant un axe géométrique (22) de rotation, le moyen de serrage (36) comportant un premier filetage (24), un deuxième filetage (28) et une interface mécanique (32) permettant la coopération avec un outil de montage pour faire tourner le moyen de serrage (36) autour de l'axe géométrique (22), les premier et deuxième filetages ayant des sens opposés de filetage ;
- un premier moyen de fixation (56) comprenant un premier filetage complémentaire (58) engagé avec le premier filetage (24), le premier moyen de fixation étant conçu pour coopérer avec l'équipement (10) de telle sorte que le premier filetage complémentaire (58) soit fixé de manière rotative par rapport à l'équipement (10) et soit empêché de se déplacer axialement par rapport à l'équipement en direction de la deuxième extrémité (30) du moyen de serrage (36) ;
- un deuxième moyen de fixation (72) comprenant un deuxième filetage complémentaire (61) engagé avec le deuxième filetage (28), le deuxième moyen de fixation étant conçu pour coopérer avec la superstructure (16) de telle sorte que le deuxième filetage complémentaire (61) soit fixé en rotation par rapport à la superstructure et ne puisse pas se déplacer axialement par rapport à la superstructure vers la première extrémité (26) du moyen de serrage (36) ; et
- un manchon d'écartement (40) comportant une première extrémité longitudinale (42) pour coopérer axialement avec l'équipement (10) et une deuxième extrémité longitudinale (44) pour coopérer axialement avec la superstructure (16).

2. Dispositif de blocage selon la revendication 1, dans lequel le premier moyen de fixation (56) est conçu pour pouvoir se déplacer par rapport à l'équipement (10) dans une direction perpendiculaire à l'axe géométrique (22).

3. Dispositif de blocage selon l'une quelconque des revendications 1 ou 2, dans lequel le deuxième moyen de fixation est conçu pour être mobile par rapport à la superstructure dans une direction perpendiculaire à l'axe géométrique.

4. Dispositif de blocage selon l'une quelconque des revendications précédentes, dans lequel
- le premier filetage est un premier filetage externe (24) faisant saillie axialement par rapport à la première extrémité (42) du manchon d'écartement et engagé avec le premier filetage complémentaire (58) ;
- le deuxième filetage est un deuxième filetage externe (28) faisant saillie axialement par rapport à la deuxième extrémité (44) du manchon d'écartement et engagé avec le deuxième filetage complémentaire (61).

5. Dispositif de blocage selon la revendication 4, dans lequel le moyen de serrage comprend une tige à deux extrémités (36) comprenant une première extrémité (26) sur laquelle est formé le premier filetage externe (24), et une deuxième extrémité (30) sur laquelle est formé le deuxième filetage externe (28), une portion intermédiaire de la tige (36) étant reçue à l'intérieur du manchon d'écartement (40).

6. Dispositif de blocage selon l'une quelconque des revendications précédentes, dans lequel l'interface mécanique (32) du moyen de serrage est positionné à l'intérieur du manchon d'écartement (40), et le manchon d'écartement présente une ouverture latérale (48) permettant d'accéder à l'interface avec l'outil de montage.

7. Dispositif de blocage selon l'une quelconque des revendications précédentes, comprenant en outre un élément d'écartement secondaire (68) situé entre la deuxième extrémité (46) du manchon d'écartement et le deuxième moyen de fixation (72).

8. Véhicule doté d'une superstructure de véhicule (16), d'un équipement (10) et du dispositif de blocage (12) selon l'une quelconque des revendications précédentes permettant de bloquer l'équipement (10) sur la superstructure de véhicule (16).

9. Véhicule selon la revendication 8, comprenant en outre un élément de verrouillage (74) pour maintenir le deuxième moyen de fixation (72) par rapport à la superstructure (16),
- au moins l'un de l'équipement (10) et de la superstructure (16) comprend une face avant orientée vers le moyen de serrage (36), une face arrière opposée au moyen de serrage (36) et un trou traversant (52, 60) permettant le passage entre la face avant et la face arrière, l'une des première et deuxième extrémités longitudinales (42, 44) du manchon d'écartement (40) venant en butée sur la face avant et entourant le trou traversant (52, 60) ; et
- au moins l'un du premier moyen de fixation (56) et du deuxième moyen de fixation (72) comprend une butée coopérant avec la face arrière.

10. Véhicule selon la revendication 9, dans lequel
- le moyen de serrage comprend une tige (20) qui s'étend à travers le trou traversant (52, 60), l'un des premier et deuxième filetages étant un filetage externe (24, 28) à une extrémité de la tige ; et
- au moins l'un des premier et deuxième moyens de fixation (56, 62) comprend un écrou (56, 62) qui est situé sur la face arrière et s'engage avec le filetage externe (24, 28).

11. Véhicule selon la revendication 10, dans lequel la tige (20) a une section qui est plus petite qu'une section du trou traversant (52, 60) de telle sorte que la tige est mobile radialement par rapport au trou traversant.

12. Véhicule selon l'une quelconque des revendications 10 ou 11, dans lequel l'équipement comprend un élément tubulaire (54) ayant un axe géométrique perpendiculaire à l'axe du dispositif de blocage, l'écrou (56) se trouvant à l'intérieur dudit élément tubulaire.

13. Véhicule selon l'une quelconque des revendications 9 à 12, comprenant en outre le moyen de verrouillage (74) afin de maintenir le deuxième moyen de fixation par rapport à la superstructure de véhicule.
